# FASCICULE DE BREVET EUROPEEN

(11) **EP 0 989 015 B1**
(45) Date de publication et mention de la délivrance du brevet: **08.10.2003**
(21) Numéro de dépôt: 99124998.8
(22) Date de dépôt: 16.06.1993
(51) Int. Cl.: B60L 5/16, B60L 5/14

(54) **Dispositif de captation d'électricité pour un véhicule tel qu'un trolleybus ou un tramway**
Stromabnehmer-Vorrichtung für Fahrzeuge, insbesondere für Überleitungsbusse oder Stadtbahnwagen
Current collector device for a vehicle such as a trolleybus or a tramway

(30) Priorité: 17.06.1992 FR 9207376
(43) Date de publication de la demande: 29.03.2000
(62) Demande divisionnaire de: 93401541.3
(73) Titulaire: DELACHAUX S.A., 92230 Gennevilliers (FR)
(72) Inventeur: Pelletier, Yves, 95000 Cergy (FR)
(74) Mandataire: Martin, Jean-Jacques

(56) Documents cités:
- EP-A- 0 015 854
- US-A- 5 115 405

## Description

La présente invention concerne un dispositif de captation d'électricité pour un véhicule tel qu'un trolleybus ou un tramway, comportant une base de montage sur le véhicule, une perche de captation d'électricité présentant une première extrémité articulée sur la base notamment autour d'un axe approximativement horizontal de basculement, dans une gamme déterminée d'orientations, et une deuxième extrémité portant une tête de captation d'électricité, et des moyens de levage pour appliquer à la perche un couple de levage, autour dudit axe de basculement, de façon à appliquer la tête de captation vers le haut contre une caténaire avec un effort dont la valeur entre dans une gamme déterminée de valeurs.

De tels dispositifs sont connus dans des modes de réalisation qui comportent un vérin de basculement articulé autour d'axes respectifs, parallèles audit axe de basculement, d'une part sur la base et d'autre part sur la perche, des moyens commandés d'alimentation du vérin de basculement en pression fluidique dans un sens correspondant à l'application, à la perche, d'un couple de descente autour dudit axe de basculement, pour provoquer un dégagement de la tête de captation vers le bas par rapport à la caténaire, et des moyens de commande desdits moyens commandés d'alimentation du vérin de basculement, et dans lesquels, comme le décrit EP-A-0015854, le vérin de basculement est un vérin pneumatique à simple effet, agissant à l'encontre des moyens de levage, quant à eux constitués par des ressorts, de façon commandée manuellement par le conducteur du véhicule pour rabattre la perche en fin de service, le vérin de basculement étant alors alimenté en pression fluidique de telle sorte que son action sur la perche surcompense celle des moyens de levage de celle-ci, ou pour freiner l'emperchage en début de service, le vérin de basculement étant alors alimenté en pression fluidique de telle sorte que son action aille à l'encontre de celle des moyens de levage, toutefois dominante.

Le vérin de basculement n'est ainsi alimenté en pression fluidique que pendant les périodes, très courtes, d'emperchage en début de service et de déperchage en fin de service, et il est par ailleurs placé en équi- pression de telle sorte que, lorsque le véhicule est en service, seuls les moyens de levage agissent sur la perche, et ceci toujours dans le même sens qui est celui de l'application de la tête de captation vers le haut contre la caténaire.

La présente invention propose un dispositif du type indiqué en préambule, caractérisé en ce qu'il comporte des moyens pour réguler ledit effort en fonction de l'inclinaison de la perche, de façon à le maintenir sensiblement à une valeur déterminée.

En effet, on constate que la seule action des moyens de levage, constitués par des ressorts, dans le cas des perches de l'Art antérieur n'est pas suffisante à cet égard, puisque l'effort d'application de la tête de captation vers le haut contre la caténaire, conditionnant d'une part l'usure de la tête de captation, d'autant plus grande que cet effort est important, et d'autre part la qualité de captation de l'électricité et la retenue de la tête de captation par la caténaire à l'encontre d'un déperchage, conditionnant la qualité de la prise de courant et la sécurité générale du dispositif, peut varier dans une large mesure notamment en fonction de l'orientation de la perche et des variations d'assiette du véhicule. A cet égard, le maintien d'un effort constant d'application de la tête de captation, vers le haut, contre la caténaire permet de maintenir cet effort à une valeur optimale, limitant l'usure de la tête de captation tout en assurant en permanence au contact entre la tête de captation et la caténaire une qualité propre à éviter aussi bien les perturbations dans la transmission de l'électricité, comme le décrit US-A-511 405 en relation avec un pantographe plus particulièrement destiné aux trains à très grande vitesse et muni, dans le but de rendre la captation d'électricité par son archet aussi insensible que possible aux coups de vent, de capteurs de force disposés à proximité de cet archet pour asservir un vérin agissant sur le pantographe dans le sens de l'application de l'archet entre la caténaire, sans relation avec l'inclinaison d'un quelconque composant comparable à une perche, que de nombreux risques de déperchage.

On peut alors conserver le vérin de basculement à simple effet de l'Art antérieur, agissant à l'encontre de moyens élastique de levage, mais on préfère remplacer ce vérin de basculement à simple effet et ces moyens élastiques de levage par un vérin de basculement à double effet, et prévoir que les moyens commandés d'alimentation de ce vérin de basculement soient susceptibles d'alimenter celui-ci en pression fluidique non seulement dans un sens correspondant à l'application, à la perche, d'un couple de descente autour de l'axe de basculement, mais également dans un sens correspondant à l'application dudit couple de levage à la perche, de telle sorte que le vérin de basculement constitue également les moyens de levage.

Les moyens pour réguler l'effort d'application de la tête de captation vers le haut contre la caténaire en fonction de l'orientation de la perche sont avantageusement constitués par des moyens de régulation de la pression fluidique d'alimentation du vérin de basculement en fonction de cette inclinaison, par exemple sous la forme d'une came solidaire de la perche à la rotation autour de l'axe de basculement et d'un régulateur de pression commandé par la came et intégré aux moyens d'alimentation du vérin de basculement.

En l'absence de moyens élastiques de levage lorsqu'on utilise ainsi un vérin de basculement à double effet, toute chute de pression dans le fluide alimentant ce vérin, qu'elle résulte d'une avarie alors que le véhicule est en service ou simplement de fuites notamment lorsque le véhicule n'est pas en service et que les moyens d'alimentation prévus, de façon traditionnelle, pour reconstituer automatiquement cette pression ne fonctionnent pas, se traduit alors automatiquement par une descente de la perche et non par une montée de celle-ci ou tendance de celle-ci à monter comme c'est le cas en présence de moyens élastiques de levage, même en présence d'un rattrape-trolley. S'il s'agit d'une avarie en service dangereuse en ce sens qu'elle peut concerner d'autres organes du véhicule, alimentés par le même fluide, il en résulte une coupure automatique de l'alimentation du véhicule en électricité et par conséquent son arrêt ; s'il s'agit de fuites alors que le véhicule est garé, il en résulte que, si le véhicule est muni d'une motorisation auxiliaire, ne nécessitant pas l'emperchage, en vue d'une circulation hors caténaire, il n'y a aucun risque que la perche soit dressée, dans une position propre à provoquer une collision avec la caténaire, les supports de caténaire ou les appareils de ligne lorsque le véhicule démarre au moyen de sa motorisation auxiliaire.

Un mode de réalisation du dispositif selon l'invention est en outre caractérisé en ce qu'il comporte des moyens de détection pour détecter une annulation dudit effort et pour commander alors automatiquement l'alimentation du vérin de basculement en pression fluidique dans ledit sens, afin de descendre automatiquement la tête de captation en cas de déperchage.

La détection de l'annulation de l'effort d'application de la tête de captation contre la caténaire, de bas en haut, peut s'effectuer par divers moyens, aptes à effectuer cette détection puis commander la descente de la perche particulièrement rapidement, et par exemple par utilisation d'une perche de type connu, présentant une zone de fléchissement privilégié en cas d'annulation de cet effort et munie de détecteurs convenables d'un tel fléchissement, ce qui permet de provoquer quasi instantanément le basculement de la perche et de la tête de captation lorsque l'effort d'application de cette dernière sous la caténaire disparaît, c'est-à-dire dès le déperchage; des essais ont démontré que l'on pouvait obtenir un temps de réponse suffisamment réduit pour que la tête de captation ne puisse monter, après déperchage, que de quelques centimètres au-dessus de la caténaire avant d'être rappelée énergiquement vers le bas, c'est-à-dire de s'effacer vers une position dans laquelle ni cette tête, ni la perche, ne risquent d'entrer en collision avec les supports de caténaire ou les appareils de ligne.

Il en résulte une sécurité considérablement accrue en cas de déperchage, sans qu'il soit pour autant nécessaire d'avoir recours, au niveau de la perche et de sa base, à des énergies autres que celles qui sont déjà présentes sur les trolleybus ou tramways équipés des perches de l'Art antérieur, les plus modernes.

A cet égard, on remarque que le vérin de basculement peut être un vérin à simple effet, agissant à l'encontre de moyens de levage constitués de ressorts, conformément à l'Art antérieur, pour servir également au déperchage et réemperchage volontaires notamment en fin et début de service respectivement bien que, comme on l'a indiqué plus haut, on préfère utiliser un vérin à double effet.

Naturellement, de façon traditionnelle, la première extrémité de la perche d'un dispositif selon l'invention est articulée sur la base non seulement autour de l'axe précité de basculement, mais également autour d'un axe de pivotement, approximativement vertical, dans une gamme déterminée d'orientations incluant une orientation déterminée de référence.

Avantageusement, les dispositions de la présente invention sont complétées par le fait que sont prévus des moyens de centrage pour ramener coercitivement la perche dans ladite position déterminée de référence, commandés par lesdits moyens de détection pour placer en outre automatiquement, en cas d'annulation dudit effort, la perche dans ladite orientation déterminée de référence en laissant par contre la perche libre de pivoter autour dudit axe de pivotement, dans ladite gamme déterminée d'orientations, lorsque la tête de captation s'applique vers le haut contre la caténaire avec un effort dont la valeur entre dans ladite gamme déterminée de valeurs.

On utilise de préférence conformément à la présente invention des moyens de centrage perfectionnés, en outre propres à placer coercitivement, de façon commandée, la perche dans toute orientation choisie dans ladite gamme déterminée d'orientations, des moyens de commande manuelle à cet égard étant mis à la disposition du conducteur du véhicule.

Par exemple, les moyens de centrage peuvent comporter un vérin de pivotement, à double effet, une transmission mécanique entre le vérin de pivotement et la perche, et des moyens commandés d'alimentation du vérin de pivotement en pression fluidique dans l'un et l'autre de deux sens mutuellement opposés pour appliquer, à la perche, un couple de pivotement autour dudit axe de pivotement, de façon à la fois particulièrement simple et fiable, d'une part, et avec possibilité de commander et de contrôler avec une grande précision l'orientation de la perche autour de l'axe de pivotement.

Les moyens de commande manuelle de l'orientation de la perche autour de l'axe de pivotement peuvent avantageusement être groupés avec des moyens de commande manuelle, connus en eux-mêmes, de l'alimentation du vérin de basculement en pression fluidique, soit au tableau de bord du véhicule, soit, de préférence, dans un boîtier de télécommande que le conducteur peut brancher pour commander ainsi de l'extérieur du véhicule, en bénéficiant d'une possibilité de contrôle visuel, d'une part sur l'orientation de la perche autour de l'axe de pivotement, et d'autre part sur l'orientation de cette perche autour de l'axe de basculement ou inclinaison de la perche, toutes les évolutions possibles de la perche sans avoir à agir sur une quelconque corde.

La corde et le rattrape- trolley traditionnellement prévus pour une perche unique ou pour chacune des deux perches, respectivement, à l'arrière des tramways et des trolleybus peuvent ainsi être supprimés, si bien que disparaissent leurs inconvénients connus de débattement plus ou moins gênant et de risque de conduction électrique, génératrice d'électrocution, en cas d'humidité en ce qui concerne la corde et de poids en ce qui concerne le tambour d'enroulement et les dispositifs auxiliaires de celui-ci.

Naturellement, la sécurité offerte par le mode de réalisation précité du dispositif selon l'invention en cas de déperchage est d'autant plus grande que la vitesse avec laquelle la tête de captation et la perche descendent lors de la disparition de l'effort d'application de la tête de captation vers le haut contre la caténaire disparaît est elle-même grande, mais il est préférable de ne pas poursuivre la descente à une vitesse aussi élevée si bien que, selon un mode de mise en oeuvre préféré de la présente invention, on prévoit des moyens pour alimenter séquentiellement le vérin de basculement en pression fluidique dans le sens de la descente, commandés par les moyens de détection d'une annulation dudit effort, pour descendre automatiquement la tête de captation en deux temps en cas de déperchage, à savoir un premier temps de descente comparativement rapide et un deuxième temps de descente comparativement lent ; les moyens de centrage sont alors commandés, par les moyens de détection, de façon à placer la perche dans ladite orientation déterminée de référence au cours du deuxième temps de descente, de telle sorte que la descente s'effectue verticalement au cours du premier temps, sans risque de collision entre la perche ou la tête de captation et la caténaire.

On remarquera qu'à la différence des vérins de basculement équipant les perches de l'Art antérieur, et qui ne sont alimentés en pression fluidique que lors de l'emperchage en début de service et du déperchage en fin de service, il est nécessaire que le vérin de basculement d'une perche conforme à la présente invention puisse être alimenté en permanence en pression fluidique, pour jouer son rôle de sécurité en cas de déperchage, ce qui est le cas du mode de mise en oeuvre de la présente invention consistant à l'alimenter en permanence en pression fluidique commandée, de façon à constituer les moyens pour réguler ledit effort en fonction de l'inclinaison de la perche, de façon à maintenir cet effort sensiblement à une valeur déterminée.

D'autres caractéristiques et avantages d'un dispositif selon l'invention ressortiront de la description ci-dessous, relatives à un exemple non limitatif de mise en oeuvre, ainsi que des dessins annexés qui font partie intégrante de cette description.
- La figure 1 montre une vue partielle et simplifiée, en élévation latérale, d'un trolleybus équipé d'un dispositif de captation d'électricité selon l'invention, avec figuration d'une part, en trait plein, d'une perche dont la tête de captation s'applique sur la caténaire dans des conditions normales de circulation, et d'autre part, en trait mixte, de la même perche après déperchage.
- La figure 2 montre une vue de dessus de ce trolleybus, normalement équipé de deux perches non représentées pour des raisons de clarté, et illustre plus particulièrement le montage de chacune de ces perches autour de l'axe respectif de pivotement.
- La figure 3 illustre, en une vue analogue à celle de la figure 1, un détail du montage de l'une des perches autour de l'axe respectif de basculement.
- La figure 4 montre, en une vue en coupe par un plan perpendiculaire à l'axe de basculement de l'une des perches et incluant l'axe de pivotement de celle-ci en constituant pour la perche un plan de symétrie, le détail d'une zone de fléchissement privilégié prévue entre des premier et deuxième tronçons de cette perche; dans des conditions normales de circulation, ce plan est approximativement vertical, de même que l'axe de pivotement, alors que l'axe de basculement est approximativement horizontal.
- La figure 5 illustre le schéma pneumatique associé à la commande de basculement et de pivotement de l'une des perches, étant entendu qu'à l'autre perche est associé un schéma identique.
- Les figures 6A et 6B, qui se complètent, illustrent le schéma électrique correspondant à cette même perche, étant entendu qu'un schéma électrique identique est associé à l'autre perche, ainsi que le schéma électrique commun aux deux perches.

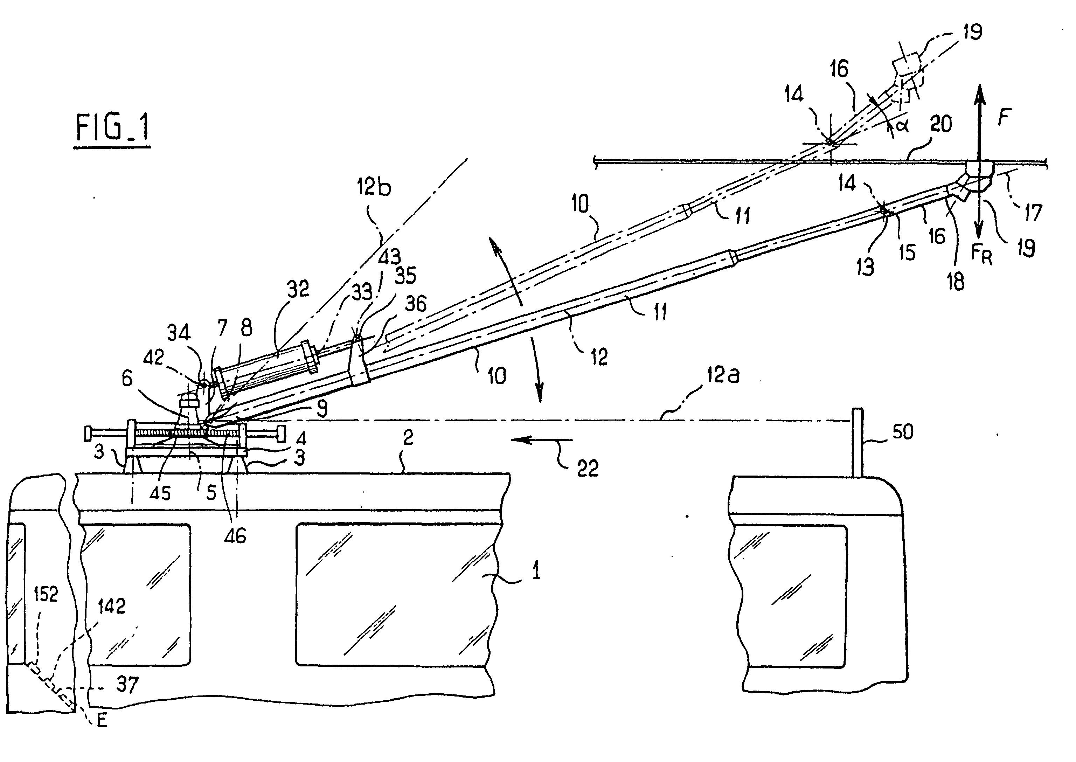

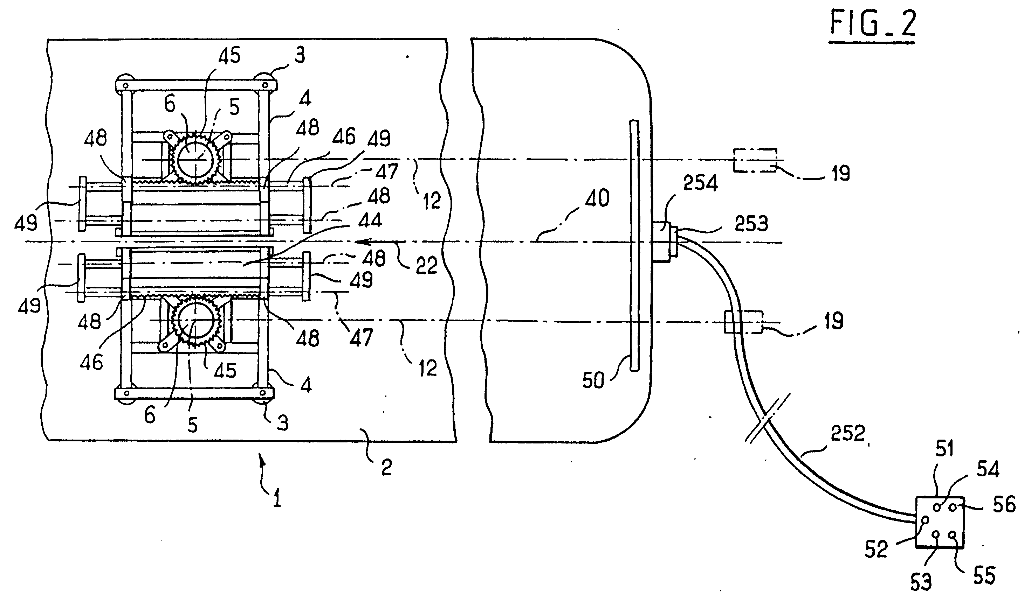

On se référera en premier lieu aux figures 1 et 2, où l'on a illustré schématiquement un trolleybus 1, dont on a désigné par 2 le toit, approximativement horizontal dans des conditions normales de circulation ; ce trolleybus 1 ne constitue toutefois qu'un exemple non limitatif de véhicule susceptible d'être équipé d'un dispositif de captation d'électricité selon l'invention, lequel pourrait notamment équiper également un tramway.

Sur le toit 2 sont fixées, par l'intermédiaire d'isolateurs électriques 3, deux bases 4 mutuellement identiques, mutuellement symétriques par rapport à un plan 40 approximativement vertical dans des conditions normales de circulation et constituant pour le trolleybus 1 un plan longitudinal de symétrie. Dans le cas d'un tramway, les deux bases 4 sont généralement remplacées par une base unique, identique à chacune d'entre elles et chevauchant le plan 40 dans une relation de symétrie propre par rapport à celui-ci, cette base unique comportant les mêmes composants, qui vont être décrits à présent, qu'une base 4 respective.

Sur chacune des bases 4 est montée, au pivotement autour d'un axe 5 approximativement vertical dans des conditions normales de circulation, une tourelle 6 libre de tourner autour de cet axe de pivotement 5 par rapport à la base 4 correspondante dans des conditions normales de circulation ; les deux axes de pivotement 5 sont mutuellement symétriques par rapport au plan 40, dans lequel est disposé l'axe de pivotement de la tourelle unique, par rapport à la base unique, dans le cas d'un tramway.

Chaque tourelle 6 porte de façon solidaire, au-dessus de la base 4 correspondante, une chape 7 définissant un axe 8 d'articulation, sur la tourelle 6, d'une première extrémité 9 d'une perche 10 respective. Cet axe 8 est situé dans un plan perpendiculaire à l'axe de pivotement 5, et il est orienté approximativement horizontalement dans des conditions normales de circulation pour constituer un axe de basculement de la perche 10 par rapport à la tourelle 6 correspondante et à la base 4 correspondante.

Les deux perches 10 sont identiques et chacune d'entre elles est formée de deux tronçons rectilignes 11, 16, d'axe respectif 12, 17, rigides si l'on excepte une éventuelle tendance du matériau les constituant à fléchir élastiquement ; ces tronçons sont par exemple constitués par un tube métallique respectif ou un assemblage respectif de tubes métalliques, d'autres modes de réalisation pouvant naturellement être choisis sans que l'on sorte pour autant du cadre de la présente invention (par exemple perche composite ou combinée composite - métal).

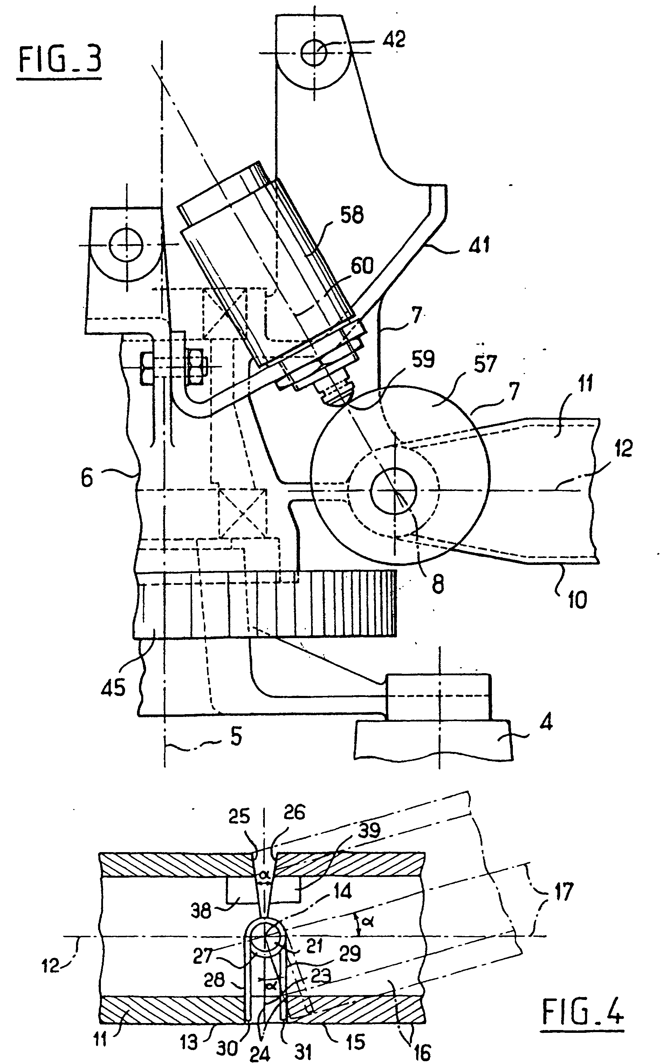

Un premier de ces tronçons, à savoir le tronçon 11, définit par l'une de ses extrémités l'extrémité 9 de la perche 10, c'est-à-dire s'articule sur la tourelle 6 respective autour de l'axe de basculement 8 auquel l'axe 12 est perpendiculaire. Par basculement du tronçon 11 autour de l'axe 8, l'axe 12 peut occuper toute orientation entre une orientation approximativement horizontale, indiquée en 12a à la figure 1 et correspondant à une position hors service en ce qui concerne la perche 10, et une orientation ascendante à partir de l'axe de basculement 8 et formant par rapport à l'horizontale un angle de l'ordre de quelques dizaines de degrés et généralement voisin de 45 degrés, comme on l'a indiqué en 12b à la figure 1, référence étant faite à des conditions normales de circulation. Des moyens 41 de butée pour le tronçon 11, prévus sur la chape 7 et visibles à la figure 3, empêchent le tronçon 11 de gagner une orientation plus proche de la verticale.

A l'opposé de son extrémité constituant l'extrémité 9 de la perche 10, le premier tronçon 11 de celle-ci présente une extrémité 13 sur laquelle s'articule, autour d'un axe 14 parallèle à l'axe de basculement 8 et constituant pour la perche 10 un axe de fléchissement privilégié, une extrémité 15 du deuxième tronçon 16 qui, à l'opposé de cette extrémité 15, présente une autre extrémité qui constitue pour la perche 10 une deuxième extrémité 18, au niveau de laquelle est assemblée, de façon rigide, au tronçon 16 une tête 19 de captation d'électricité. Le tronçon 16, mesuré suivant son axe 17, présente une longueur hors tout largement inférieure à celle du tronçon 11, mesuré suivant son axe 17, si bien que, en particulier, on peut considérer que la perche 10 présente entre ses extrémités 8 et 18 une orientation générale sensiblement confondue avec celle de l'axe 12. A titre d'exemple non limitatif, le rapport entre les longueurs respectives des tronçons 16 et 11 peut être de l'ordre de 1 à 10, pour une longueur totale de l'ordre de plusieurs mètres et par exemple comprise entre 5 et 7 m.

Divers modes de réalisation d'une tête de captation d'électricité sont connus d'un Homme du métier et peuvent être choisis, si bien que la tête 19 ne sera pas décrite ; en particulier, cette tête peut être du type décrit dans le brevet européen N° 0 226 497 de la Demanderesse. On rappellera simplement qu'elle est conçue pour s'appliquer de bas en haut, verticalement, sous une caténaire 20 approximativement horizontale, sous laquelle se déplace le trolleybus 1, en appliquant à cette caténaire 20 un effort F dirigé de bas en haut, verticalement, et dont la valeur entre dans une gamme déterminée de valeurs pour permettre une alimentation satisfaisante d'un moteur et de divers organes du trolleybus 1 en électricité ; le trolleybus 1, se déplaçant dans un sens schématisé par une flèche 22 à la figure 1, traîne alors la tête de captation 19 qui est, de ce fait, décalée vers l'arrière et vers le haut par rapport à l'axe de basculement 8, à partir duquel la perche 10 est ascendante vers l'arrière, l'axe 12 du tronçon 11 présentant une orientation intermédiaire entre les orientations limites schématisées en 12a et 12b. La tête de captation 19 est raccordée au moteur et aux organes précités du véhicule par l'intermédiaire de câbles non représentés qui, au niveau de la perche 10, sont avantageusement logés à l'intérieur des tronçons tubulaires 11 et 16 constituant celle-ci.

Dans l'exemple illustré, l'axe 14 de fléchissement de la perche 10 est sécant des axes 12 et 17, comme le montre mieux la figure 4 à laquelle on se référera à présent. Un Homme du métier pourra cependant choisir une autre disposition quant à l'axe 14 sans sortir pour autant du cadre de l'invention, et notamment placer celui-ci au-dessus des axes 12 et 17, toutefois de préférence dans les limites de l'enveloppe géométrique des tronçons 11 et 16 au niveau de leurs extrémités 13 et 15 afin d'éviter la formation de toute saillie au-dessus de la perche à proximité de la tête de captation 19.

L'axe 14 est avantageusement matérialisé par un tourillon 21 sur lequel les extrémités 13 et 15 des tronçons 11 et 16, ou des embouts solidaires de ces extrémités 13 et 15 respectivement, s'articulent par l'intermédiaire de chapes non représentées, d'une façon aisément concevable par un Homme du métier.

L'articulation mutuelle des deux tronçons 11 et 16 autour de l'axe 14 est conçue de telle sorte que le tronçon 16 puisse occuper par rapport au tronçon 11 toute orientation entre une orientation illustrée en trait plein à la figure 4, dans laquelle les axes 12 et 17 sont confondus et le tronçon 16 prolonge ainsi directement le tronçon 11, et une position limite illustrée en trait mixte à la figure 4, dans laquelle le tronçon 16 est décalé vers le haut par rapport à la position limite précitée, bien qu'étant encore placé sensiblement dans le prolongement du tronçon 11 ; dans cette dernière position limite, l'axe 17 forme par rapport à l'axe 12 un angle α qui, à titre d'exemple non limitatif, peut être de l'ordre de 15 degrés et qui, en tout état de cause, est inférieur à l'inclinaison maximale de l'axe 12 par rapport à l'horizontale, de telle sorte que même lorsque l'axe 12 du tronçon 11 occupe son orientation limite illustrée en 12b, l'axe 17 du tronçon 16 reste incliné dans le même sens que cet axe 12.

Les deux positions limites, précitées, du tronçon 16 par rapport au tronçon 11 par pivotement relatif autour de l'axe 14 sont définies par butée mutuelle de ces deux tronçons au niveau de leurs extrémités 13 et 15. A cet effet, par exemple, ces extrémités 13 et 15 présentent en dessous de l'axe 14, si l'on suppose par exemple la perche 10 dans sa position dans laquelle la tête de captation 19 s'applique contre la caténaire 20, une face respective 23, 24 plane, passant par l'axe 14, les deux faces 23 et 24 tournées l'une vers l'autre étant en appui mutuel lorsque les axes 12 et 17 sont confondus ; au-dessus de l'axe 14 si l'on se réfère à la même position de la perche 10, les tronçons 13 et 15 présentent l'un vers l'autre une face respective 25, 26 également plane et incluant l'axe 14, les deux faces 25 et 26 étant mutuellement disjointes en définissant entre elles l'angle α lorsque les axes 12 et 17 sont confondus. Dans la position limite du tronçon 16, par rapport au tronçon 11, illustrée en trait mixte à la figure 4, les extrémités 13 et 15 de ces tronçons s'appliquent l'une contre l'autre par les faces 25 et 26, alors que les faces 23 et 24 sont mutuellement disjointes et définissent entre elles l'angle α.

Des moyens sont prévus pour tendre à ramener élastiquement le tronçon 16 dans son orientation illustrée en trait mixte à la figure 4, par rapport au tronçon 11.

Ces moyens peuvent être conçus de différentes façons mais on a illustré à la figure 4 un mode de réalisation préféré, particulièrement simple et fiable, selon lequel ces moyens sont constitués par un ressort en épingle 27 enroulé autour du tourillon 21 et présentant deux branches 28, 29 en butée antagoniste, dans des sens tendant à disjoindre les faces 23 et 24, dans des logements 30, 31 aménagés respectivement dans l'extrémité 13 du tronçon 11 et dans l'extrémité 15 du tronçon 16, en dessous de l'axe 14 si l'on se réfère par exemple à l'orientation de la perche 10 correspondant à l'application de la tête de captation 19 sous la caténaire 20.

Pour assurer ou, le cas échéant, supprimer cette application sont prévus des moyens agissant entre le tronçon 11 de la perche 10 et la chape 7, lesquels moyens pourraient présenter, de façon non illustrée, la forme connue de ressorts hélicoïdaux et d'un vérin pneumatique à simple effet agissant, suivant des axes respectifs 33 parallèles à l'axe 12, respectivement en traction et en poussée entre une zone 34 de la chape 7 située au-dessus de l'axe d'articulation 8, si l'on se réfère à une position normale de circulation du trolleybus 1, et une zone 35 d'une chape 36 fixée solidairement sur le premier tronçon 11 entre les extrémités de celui-ci, les zones 35 étant situées au-dessus de ce premier tronçon 11 si l'on se réfère par exemple à l'orientation de la perche 10 correspondant à l'application de la tête 19 sous la caténaire 20. Ces ressorts hélicoïdaux et ce vérin à simple effet sont toutefois de préférence remplacés, selon le mode de mise en oeuvre préféré de la présente invention qui sera décrit par la suite, par un vérin à double effet 31, de préférence pneumatique, susceptible d'agir de façon commandée soit en traction, soit en poussée, suivant un axe 35 unique entre les zones précitées 34 et 35 dans lesquelles il est articulé, respectivement sur la chape 7 et sur la chape 36, autour d'axes respectifs 42, 43 parallèles à l'axe 8 de basculement.

Le ressort en épingle 27 est calibré de telle sorte que, lorsque le vérin 32 applique au tronçon 11 de la perche 10, autour de l'axe 8, un couple propre à appliquer la tête 19 vers le haut, contre la caténaire 20, avec un effort F dont la valeur entre dans la gamme précitée et alors que la caténaire 20 oppose une réaction à ce couple sous forme d'un effort F_{R} de même valeur que l'effort F mais de sens opposé, appliqué par la caténaire 20 à la tête de captation 19, la tendance du ressort en épingle 27 à écarter mutuellement les faces 23 et 24 des extrémités 13 et 15 des tronçons 11 et 16 soit surcompensée, et que les tronçons 15 et 16 occupent par conséquent leur position illustrée en trait plein à la figure 4, c'est-à-dire la position de confusion des axes 12 et 17, comme le montre également en trait plein la figure 1.

Les deux tronçons 11 et 16 occupent cette position dans les conditions normales de circulation du trolleybus 1, mais si un déperchage, c'est-à-dire un échappement de la tête 19 vis-à-vis de la caténaire 20, se produit comme le montre la figure 1, en trait mixte, dans sa partie supérieure, ce déperchage se traduit par un passage quasi immédiat du tronçon 16 à son orientation illustrée en trait mixte à la figure 4, par rapport au tronçon 11, dans la mesure où la caténaire 20 n'oppose plus aucune réaction notamment à l'action du ressort 27 entre les tronçons 11 et 16.

Ces derniers viennent ainsi en butée mutuelle par les faces 25 et 26 de leurs extrémités 15 et on peut détecter le déperchage par détection de cette venue en butée mutuelle, par exemple au moyen de détecteurs inductifs ou mécaniques 38, 39 montés solidairement sur les extrémités 13 et 15 des tronçons 11 et 16 pour détecter le contact mutuel des faces 25 et 26.

Naturellement, chacune des deux perches 10 est ainsi conçue pour coopérer avec une caténaire 10 respective et il est bien entendu que d'autres structures de perche, équipées d'autres moyens de détection aussi instantanée que possible du déperchage, par détection de l'annulation de l'effort d'application de la tête de captation vers le haut contre la caténaire, pourraient être choisies sans que l'on sorte pour autant du cadre de la présente invention. La détection pourrait notamment résulter d'un montage élastique de la tête de captation sur la perche, alors réalisée d'un seul tronçon.

Selon un mode de mise en oeuvre préféré de la présente invention, la détection du déperchage provoque l'émission d'un signal qui, d'une part, déclenche une alarme lumineuse ou sonore 142 placée au tableau de bord 37 du trolleybus 1 pour avertir le conducteur de celui-ci qui, ainsi, peut garer son véhicule et l'arrêter dans les meilleures conditions et, d'autre part, provoque une alimentation du vérin 32 en fluide sous pression dans un sens correspondant à la descente de la perche 10, afin de ramener le plus rapidement possible la tête de captation 19 à un niveau inférieur à celui de la caténaire 20, par exemple en ramenant l'axe 12 du tronçon 11 dans la position approximativement horizontale illustrée en 12a à la figure 1.

Avantageusement, cette descente s'effectue en deux temps, à raison d'un premier temps comparativement rapide, suffisant pour dégager la tête de captation 19 vers le bas par rapport à la caténaire 20, et un deuxième temps comparativement lent, de descente jusqu'à ce que l'axe 12 occupe l'orientation illustrée en 12a.

Naturellement, lorsqu'un déperchage survient, il n'est pas rare que la tête 19 soit plus ou moins décalée latéralement par rapport au trolleybus 1 et, selon un mode de mise en oeuvre préféré de la présente invention, il est prévu que le deuxième temps de la descente de la perche 10 après déperchage s'accompagne d'un rappel de cette perche 10 dans une orientation déterminée par rotation conjointe avec la tourelle 6 autour de l'axe de pivotement 5, par rapport à la base 4 correspondante. Par exemple, dans cette orientation déterminée, l'axe 12 du tronçon 11 de la perche est parallèle au plan de symétrie 40, et la perche est tournée vers l'arrière à partir de l'axe de pivotement 5 respectif, c'est-à-dire que la tête de captation 19 est située en porte-à-faux vers l'arrière par rapport au trolleybus 2, référence étant faite au sens 22 de marche avant du trolleybus.

A cet effet, dans l'exemple illustré, chaque tourelle 6 est reliée par une transmission mécanique appropriée à un vérin respectif 44, à double effet, dont le corps est porté de façon solidaire par la base 4 respectivement correspondante, à un niveau inférieur à celui de l'axe de basculement 8 respectif.

Dans l'exemple illustré, la transmission mécanique entre chaque vérin 44 et la tourelle 6 respectivement correspondante comporte une couronne dentée 45, d'axe 5, solidaire de cette tourelle 6 à un niveau inférieur à celui de l'axe de pivotement 8 bien qu'au-dessus de la base 4 correspondante, et une crémaillère rectiligne, horizontale 46 apte à coulisser suivant une direction rectiligne 47 approximativement horizontale, par exemple parallèle au plan 40, dans des guides 48 solidaires du bâti 4 correspondant et disposés de telle sorte que la crémaillère 46 engrène en permanence avec la couronne dentée 45 correspondante. Les vérins 44 sont disposés, par exemple entre les tourelles 6, de telle sorte que leurs tiges se déplacent suivant des directions 48 parallèles aux directions 47, et la tige de chacun est raccordée de façon solidaire à la crémaillère 46 respectivement correspondante; par exemple, à cet effet, la tige de chaque vérin 44 dépasse de part et d'autre du corps de celui-ci suivant la direction 48 respective, et porte à ses deux extrémités un joug 49 de raccordement solidaire avec une extrémité respective de la crémaillère 46, laquelle dépasse également de part et d'autre des guides 48 suivant la direction 47.

Les vérins 44 sont de préférence de type pneumatique comme les vérins 32, de façon à utiliser une source d'énergie déjà disponible sur le trolleybus 32.

Ce sont des vérins à double effet, placés en équi-pression dans des conditions normales de circulation et dont la détection d'un déperchage provoque automatiquement l'alimentation en pression fluidique dans un sens propre à ramener la perche 10 correspondante dans l'orientation précitée, dans laquelle l'axe 12 du tronçon 11 est parallèle au plan 40 et la perche 10 tournée vers l'arrière en référence au sens 22, en pratique au cours du deuxième temps de la descente ; ainsi, lorsque l'axe 12 occupe sa position illustrée en 12a, il est par ailleurs parallèle au plan 40, ce qui constitue pour la perche 10 une position de repos dans laquelle elle peut avantageusement reposer dans un berceau 50 prévu à l'arrière du trolleybus, de façon connue en elle-même et non représentée dans le détail.

On remarquera que pour emplir cette fonction, les vérins 44 et les crémaillères 46 doivent être dimensionnés de telle sorte que chaque crémaillère 46, en prise permanente avec la couronne 45 correspondante, puisse accomplir suivant l'axe 47 respectif une course suffisante pour accompagner tous les pivotements que la perche 10 peut effectuer avec la tourelle 6, autour de l'axe de pivotement 5 correspondant, dans les conditions normales de circulation du trolleybus 1.

De ce fait, on peut également prévoir de commander manuellement l'alimentation des vérins 44 en pression fluidique pour orienter à volonté chaque perche 10, autour de l'axe 5 respectif, de même que l'on peut prévoir d'alimenter le vérin 32 de façon commandée manuellement, pour orienter à volonté l'axe 12 par rotation autour de l'axe de basculement 8 respectivement correspondant, de façon à effectuer par commande manuelle toute opération de déperchage et d'emperchage, que ce soit au dépôt, respectivement en fin et début de service, auquel cas il n'est plus nécessaire de prévoir un repérage précis de la position du trolleybus 1 par rapport à la caténaire 20, ou en ligne, par exemple après déperchage ou en cas d'incident nécessitant une mise hors tension du trolleybus 1.

Ces manoeuvres peuvent être commandées depuis le tableau de bord 37 du trolleybus 1 mais, de préférence, en complément ou en remplacement, on met à cet effet, à la disposition du conducteur de celui-ci, un boîtier 51 de télécommande manuelle, muni d'un câble souple 252 qu'une fiche 253, enfichable dans une prise 54 prévue par l'exemple à l'arrière du trolleybus 1, à l'extérieur de celui-ci, notamment suivant son plan 40 ou encore du côté de celui-ci correspondant à celui du trottoir le plus proche en circulation normale, permet de raccorder à des moyens de commande des vérins 44 et 32. Ce boîtier 51 comporte avantageusement une touche 52 de sélection de perche de droite ou de perche de gauche, référence étant faite au sens 22 de marche avant du trolleybus 2, des touches 53 et 54 de mouvement de la perche sélectionnée respectivement vers la gauche ou vers la droite, par pivotement autour de l'axe 5 respectivement correspondant grâce à une alimentation appropriée du vérin 44 lui-même respectivement correspondant, et des touches 55, 56 respectivement de montée et de descente de la perche sélectionnée, par alimentation appropriée du vérin 32 respectivement correspondant et rotation autour de l'axe de basculement 8 lui-même respectivement correspondant. Dans le cas d'un tramway, ne comportant qu'une perche, la touche ou bouton- poussoir 52 de sélection est inutile, de même que l'on pourrait l'omettre dans le cas d'un boîtier 51 destiné à un trolleybus 1, muni de deux perches, en prévoyant en deux exemplaires, associés respectivement à l'une et l'autre des perches 10, les touches ou boutons-poussoirs 53 à 56. Il est bien entendu que les touches 52 à 56 pourraient être remplacées par tout moyen équivalent, les touches 53 à 56 pouvant notamment être remplacées par un manipulateur à levier.

En dehors de ses périodes d'alimentation volontaire ou coercitive, en vue d'effectuer des manoeuvres de déperchage et emperchage volontaires de la perche 10 respectivement correspondante ou de la ramener coercitivement à sa position de repos en cas de déperchage accidentel, et des périodes pendant lesquelles la perche est ainsi placée au repos, le vérin 32 est alimenté en pression fluidique, selon la présente invention, de façon asservie à l'inclinaison de la perche 10 respectivement correspondante, c'est-à-dire par exemple à l'orientation de l'axe 12 du tronçon 11 de celle-ci, pour tendre en permanence à lever cette perche 10 de telle sorte que l'effort F d'application de la tête de captation 19 de bas en haut contre la caténaire 20 soit de valeur aussi constante que possible.

A cet effet sont prévus des moyens de captation de l'orientation de l'axe 12 par rotation autour de l'axe de basculement 8, par rapport à la tourelle 6 correspondante, par exemple sous la forme d'une came 57 illustrée à la figure 3. Cette came 57 est solidarisée par tout moyen approprié avec l'extrémité du tronçon 10 de la perche 11 définissant l'extrémité 9 de celle-ci et, en particulier, tourne conjointement avec le tronçon 11 autour de l'axe de basculement 8, par rapport à la chape 7 correspondante. Cette dernière porte en outre de façon solidaire, à proximité de l'axe 8, un régulateur de pression 58 comportant un toucheau de commande 59 placé au contact de la came 57 et susceptible de provoquer une régulation de pression par translation, par rapport au régulateur de pression 58, suivant une direction 60 radiale en référence à l'axe de basculement 8 ; ainsi, le régulateur de pression 58, intégré dans le circuit d'alimentation du vérin 32 en pression fluidique, peut délivrer pour chaque position de l'axe 12 à la rotation autour de l'axe de basculement 8 une pression de valeur caractéristique de cette orientation. Le dessin de la came 57 afin que la pression fluidique ainsi envoyée au vérin 32, dans le sens de la levée de la perche 10, ait pour résultat une constance du moins approximative de l'effort F relève des aptitudes normales d'un Homme du métier.

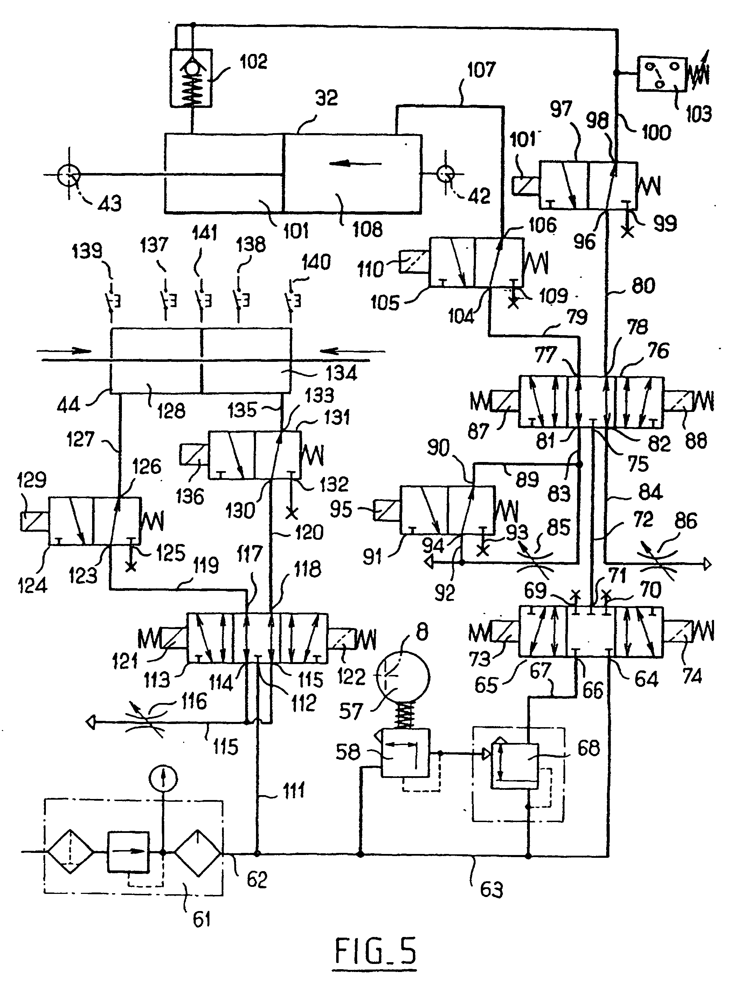

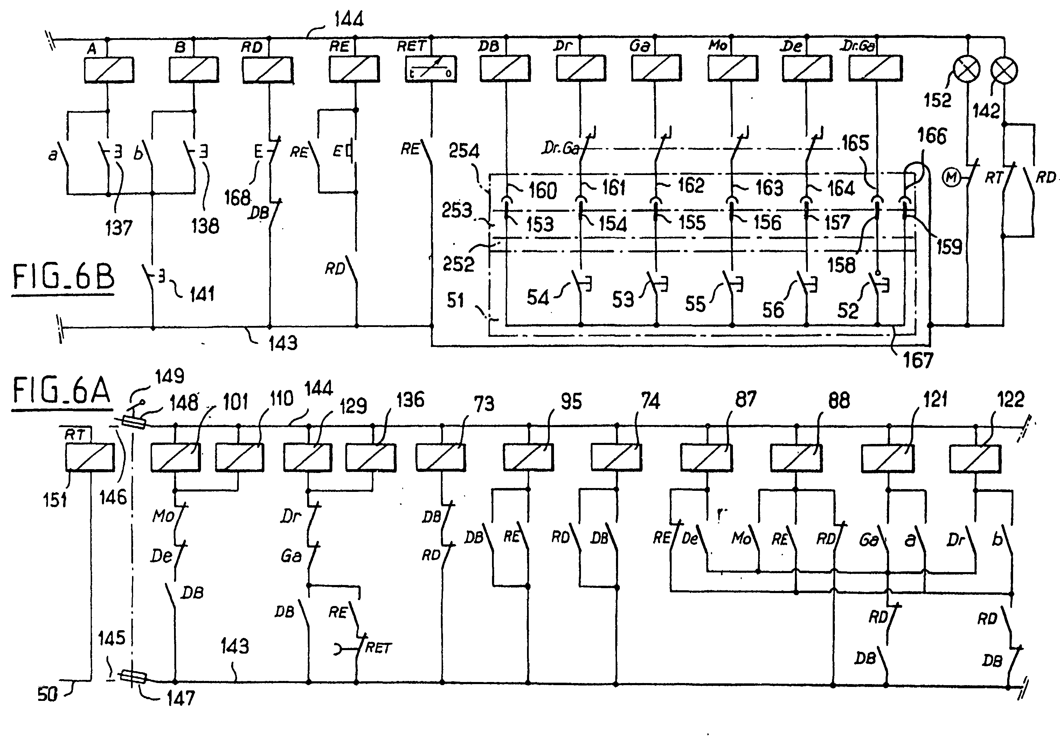

Naturellement, le mode de réalisation des moyens permettant un tel fonctionnement du dispositif qui vient d'être décrit peut varier dans une large mesure et on a illustré simplement à titre d'exemple non limitatif de tels moyens, aux figures 5 et 6A, 6B, respectivement, un schéma pneumatique et un schéma électrique correspondants, susceptibles de donner satisfaction à cet égard.

On se référera en premier lieu à la figure 5, où l'on a illustré en 61 une alimentation pneumatique de type connu, généralement présente sur la plupart des véhicules que peut concerner la présente invention et susceptible de délivrer un fluide pneumatique, c'est-à-dire de l'air comprimé, à une pression non régulée de valeur cependant approximativement constante, par exemple de l'ordre de 5 bars, au niveau d'une sortie 62. Naturellement, l'alimentation 61 est commune à la commande des deux perches 10 mais on n'a représenté à la figure 5, que l'on va décrire à présent, que le schéma pneumatique correspondant à l'une de ces perches 10, étant entendu qu'un schéma pneumatique identique est associé à l'autre perche.

La sortie 62 de l'alimentation 61 est raccordée directement, par une conduite 63, à une entrée 64 d'un distributeur 65 présentant une autre entrée 66 quant à elle raccordée à la conduite 63 par une conduite 67 comportant un amplificateur de débit 68 commandé par le régulateur de pression 58, lui-même alimenté à partir de la conduite 63 et commandé par la came 57 lors de sa rotation autour de l'axe de basculement 8.

Le distributeur 65 présente par ailleurs trois sorties à raison de deux sorties 69, 70 obturées de façon étanche et d'une sortie 71 à laquelle se raccorde une conduite 72.

Dans un état de repos dans lequel le distributeur 65 est illustré, les deux entrées 64 et 66 de même que les trois sorties 69 et 71 de celui-ci sont mutuellement isolées mais l'excitation d'un premier solénoïde 73 associé au distributeur 63 permet de placer celui-ci dans un état dans lequel sa sortie 71 communique avec son entrée 66, de telle sorte que la conduite 72 soit alimentée en pression fluidique régulée par l'ensemble formé du régulateur de pression 58 et de l'amplificateur de débit 68, alors que l'entrée 64 de pression non régulée est raccordée à la sortie fermée 70 et que la sortie 69 est obturée, et l'excitation d'un deuxième solénoïde 74 également associé au distributeur 65 permet de placer celui-ci dans un état dans lequel la conduite 72 est raccordée à l'entrée 64 de pression non régulée alors que l'entrée 66 de pression régulée est raccordée à la sortie fermée 69 et la sortie 70 obturée.

Le distributeur 65 constitue un distributeur de sélection entre une alimentation du vérin 32 en pression fluidique régulée automatiquement en fonction de l'inclinaison de la perche, lorsque le solénoïde 73 est excité, ce qui correspond au fonctionnement normal lorsque le trolleybus 1 circule, et une alimentation du vérin 32 en pression non régulée, ce qui correspond à la commande manuelle, sur laquelle la commutation s'effectue notamment de façon automatique lorsqu'on enfiche la fiche 253 du boîtier de télécommande 251 dans la prise 254 du trolleybus 1, ou encore en cas de déperchage, en vue du réemperchage. Les moyens de commande, à cet effet, des solénoïdes 73 et 74 de même que ceux des solénoïdes associés aux autres distributeurs qui vont être décrits en référence à la figure 5 seront décrits ultérieurement, en référence aux figures 6A et 6B.

La conduite 72 raccorde en permanence la sortie 71 du distributeur 65 à une entrée 75 d'un autre distributeur 76 constituant quant à lui un distributeur de commande de la montée et de la descente de la perche 10, par alimentation du vérin 32 dans des sens appropriés. Le distributeur 76 présente par ailleurs deux entrées- sorties 77, 78 auxquelles sont raccordées respectivement une conduite 79 et une conduite 80, et deux sorties 81, 82 raccordées à des conduites respectives 83, 84 dont chacune mène à l'air libre par l'intermédiaire d'un étranglement réglable respectif 85, 86, destiné à assurer un effet de ralentissement des mouvements de montée ou de descente de la perche 10 au moyen du vérin 32, respectivement.

Dans une position de repos, illustrée à la figure 5, les sorties 81 et 82 du distributeur 76 sont raccordées respectivement à son entrée- sortie 77 et à son entrée-sortie 78, alors que l'entrée 75 est obturée. L'excitation d'un premier solénoïde 87 permet de placer le distributeur 76 dans un état dans lequel l'entrée 75 est raccordée à l'entrée- sortie 77, et l'entrée- sortie 78 à la sortie 82, alors que la sortie 81 est obturée ; cet état correspond à une commande de descente de la perche par l'intermédiaire du vérin 32. L'actionnement d'un autre solénoïde 88 également associé au distributeur 76 permet de placer celui-ci dans un autre état, dans lequel la sortie 82 est obturée, l'entrée 75 communique avec la sortie 78 et l'entrée- sortie 77 avec la sortie 81 ; cet état correspond à un état de commande de la montée de la perche par l'intermédiaire du vérin 32.

Entre la sortie 81 du distributeur 76 et l'étranglement 85 est branchée en dérivation sur la conduite 83 une conduite 89 qui mène à une entrée- sortie 90 d'un distributeur 91 destiné à ne mettre en service l'étranglement 85 de ralentissement à la montée qu'en cas de commande manuelle de montée de la perche 10 par l'intermédiaire du vérin 32 soit au moyen du boîtier de télécommande 51, soit par action manuelle du conducteur du trolleybus 1 sur un bouton- poussoir E placé au tableau de bord, et à raccorder directement la sortie 81 du distributeur 91 à l'air libre dans tout autre cas. Ce distributeur 91 comporte par ailleurs une entrée 94 qu'une conduite 92 raccorde à la conduite 83, dans une zone située entre l'étranglement 85 et le débouché de la conduite 83 à l'air libre, et une sortie 93 obturée.

Dans un état de repos, illustré à la figure 5, le distributeur 91 raccorde son entrée 94 à son entrée- sortie 90, si bien que l'étranglement 85 est court-circuité, et que les mouvements de montée de la perche 10 peuvent s'effectuer sans entrave en dehors des périodes de commande manuelle, à savoir notamment dans des conditions normales de circulation, lorsque le vérin 32 est alimenté en pression régulée en fonction de l'inclinaison de la perche afin de maintenir l'effort F à une valeur aussi constante que possible ; la sortie 93 est alors obturée. L'actionnement d'un solénoïde 95 de commande de montée manuelle de la perche 10, sous l'effet du vérin 32, permet de placer le distributeur 91 dans un état dans lequel son entrée 94 est obturée et son entrée- sortie 90 raccordée à sa sortie fermée 93.

La conduite 80 raccorde en permanence l'entrée-sortie 78 du distributeur 76 à une entrée 96 d'un distributeur 97 de verrouillage de montée de la perche, lequel distributeur 97 comporte en outre une entrée- sortie 98, à laquelle se raccorde une conduite 100, et une sortie 99 obturée.

Dans un état de repos, illustré à la figure 5, le distributeur 97 met en communication son entrée 96 et son entrée- sortie 98 alors que sa sortie 99 est obturée. L'excitation d'un solénoïde 101 permet de placer le distributeur 97 dans un autre état, dans lequel son entrée 96 est obturée et son entrée- sortie 98 communique avec sa sortie 99 obturée.

La conduite 100 raccorde la sortie 98 du distributeur 97 à une chambre 101 du vérin 32, l'alimentation de cette chambre 101 provoquant la rentrée de la tige du vérin, c'est-à-dire le raccourcissement apparent de celui-ci entre les axes d'articulation 42 et 43, et par conséquent la montée de la perche 10 par basculement autour de l'axe 8 par rapport à la tourelle 6 correspondante. Pour constituer une sécurité en cas de chute de pression, par exemple du fait d'une rupture de conduite, dans la conduite 100 est intercalé, à proximité immédiate de la chambre 101 de montée de'perche, un clapet anti- retour 102 passant dans un sens allant de l'entrée-sortie 98 du distributeur 97 vers la chambre 101 de montée de perche et bloquant en sens opposé ; en outre, est monté sur la conduite 100, entre l'entrée- sortie 98 du distributeur 97 et le clapet 102, un manostat 103, réglable, de détection de chute de pression.

Quant à elle, la conduite 79 raccorde l'entrée-sortie 77 du distributeur 76 à une entrée- sortie 104 d'un distributeur 105 de verrouillage de descente, lequel comporte en outre une sortie 109 obturée et une entrée-sortie 108 qu'une conduite 107 raccorde en permanence à une deuxième chambre 108 du vérin 32, chambre dont l'alimentation en pression fluidique correspond à une sortie de la tige du vérin 32, c'est-à-dire à un écartement mutuel des axes 42 et 43 et par conséquent à une descente de la perche 10. Dans un état de repos, illustré à la figure 5, le distributeur 105 met en communication son entrée 104 et son entrée- sortie 106 alors que sa sortie 109 est obturée. L'excitation d'un solénoïde 110 permet toutefois de placer le distributeur 105 dans un état dans lequel son entrée- sortie 106 est raccordée à sa sortie 109, obturée, alors que son entrée 104 est également obturée.

Outre la conduite 63 est branchée à la sortie 62 de l'alimentation 61 en fluide sous pression une conduite 111 raccordée en permanence à une entrée 112 d'un distributeur 113 de recentrage de la perche 10 par alimentation appropriée du vérin 44 correspondant. Outre cette entrée 112, le distributeur 113 comporte deux sorties 114, 115 raccordées à une même conduite 115 menant à l'air libre par l'intermédiaire d'un étranglement réglable 116, et deux entrées- sorties 117, 118 dont chacune débouche sur une conduite respective 119, 120.

Dans un état de repos, illustré à la figure 5, les entrées- sorties 117, 118 communiquent avec les sorties 114, 115, respectivement alors que l'entrée 112 est obturée. Par excitation d'un solénoïde 121, lorsque la perche 10 et la tête de captation 19 doivent être déplacées vers la gauche, on peut placer le distributeur 113 dans un état dans lequel son entrée- sortie 118 reste en communication avec sa sortie 115 mais son entrée- sortie 117 communique avec son entrée 112 alors que la sortie 14 est obturée. Par excitation d'un deuxième solénoïde 122, lorsque le mouvement de la perche 10 et de la tête 9 doit s'effectuer vers la droite, on peut amener le distributeur 113 dans un état dans lequel son entrée- sortie 117 communique avec sa sortie 114 alors que son entrée- sortie 118 communique avec son entrée 112 et que sa sortie 115 est obturée.

La conduite 119 raccorde en permanence l'entrée-sortie 117 du distributeur 113 à une entrée 123 d'un distributeur 124 de verrouillage- droit, lequel comporte en outre une sortie 125 obturée et une entrée- sortie 126 à laquelle se raccorde une conduite 127 menant à une chambre 128 du vérin 44, chambre 128 dont l'alimentation en fluide sous pression provoque un déplacement de la tige du vérin 44 dans un sens correspondant à un déplacement de la perche 10 et de la tête de captation 19 vers la gauche, en référence au sens 22 de marche avant du trolleybus 2.

Au repos, le distributeur 124 occupe la position illustrée à la figure 5, dans laquelle son entrée 123 communique avec son entrée- sortie 126 alors que sa sortie 125 est obturée. Par actionnement d'un solénoïde 129, on peut l'amener dans un état dans lequel l'entrée 123 est obturée et l'entrée- sortie 126 en communication avec la sortie obturée 125.

De façon analogue, la conduite 120 mène à une entrée 130 d'un distributeur 131 de verrouillage- gauche, lequel comporte en outre une sortie 132 obturée et une conduite 133 qu'une conduite 135 raccorde en permanence à une chambre 134 du vérin 44, chambre 134 dont l'alimentation en fluide sous pression provoque le déplacement de la perche 10 et de la tête de captation 19 vers la droite, référence étant faite au sens 22.

Dans un état de repos, illustré à la figure 5, l'entrée- sortie 133 est raccordée à l'entrée 130 alors que la sortie 132 est obturée. L'excitation d'un solénoïde 136 permet toutefois de placer le distributeur 131 dans un état dans lequel son entrée- sortie 133 communique avec sa sortie obturée 132 alors que son entrée 130 est obturée.

En association avec le vérin 44, on a illustré à la figure 5 cinq interrupteurs de fin de course, ouverts au repos, qui peuvent être disposés le long de la crémaillère 46 ou autour de la couronne 45, par exemple, pour détecter des orientations déterminées de la perche 10, et plus précisément de l'axe 12 du tronçon 11 de celle-ci, au pivotement conjoint avec la tourelle 6, autour de l'axe 5 par rapport à la base 4 correspondante. Plus précisément, le fin de course 141 est disposé de façon à se fermer lorsque l'axe 12 est situé parallèlement au plan 40, la perche 10 étant tournée vers l'arrière comme le montre la figure 2 et deux fins de course 137 et 138 sont disposés respectivement de part et d'autre de ce fin de course 141, à proximité de celui-ci, pour se fermer si la perche 10 et la tête de captation 19 sont décalées respectivement vers la droite et vers la gauche par rapport à une telle orientation, référence étant faite au sens 22 de marche avant du véhicule, si bien que leur recentrage éventuel nécessite un mouvement vers la gauche ou vers la droite, respectivement. Deux autres fins de course 139, 140, extérieurs au dispositif selon l'invention, sont prévus pour signaler au conducteur du trolleybus, par exemple par allumage de témoins lumineux au tableau de bord de celui-ci ou par alarme sonore, que la perche atteint, par rotation autour de l'axe 5 par rapport à la base 4 vers la gauche ou vers la droite, une orientation correspondant à un excès de porte-à-faux latéral par rapport au trolleybus 1, pouvant provoquer un déperchage accidentel.

L'alimentation en électricité des différents dispositifs qui viennent d'être décrit est assurée de façon autonome, en basse tension, par des batteries d'accumulateur non représentées, équipant le trolleybus 1 ; de ce circuit basse tension, on a représenté simplement aux figures 6A et 6B des lignes 143 d'arrivée et 144 de retour, susceptibles d'être raccordées aux pôles 145, 146 de la batterie d'accumulateurs, respectivement, par des contacts respectifs 147, 148 normalement ouverts, commandés par le commutateur manuel général 149 du trolleybus 1.

Outre des parties pertinentes de ce circuit basse tension, on a illustré à la figure 6A une partie 150 du circuit haute tension, directement alimenté en électricité par les caténaires 20 lorsque les têtes de captation 19 s'appliquent contre ces dernières, à savoir une partie de ce circuit haute tension 150 comportant un relais de tension 151 excité tant que le circuit 150 est sous tension, c'est-à-dire tant qu'il n'y a pas déperchage et que les caténaires 20 sont sous tension.

Ce relais de tension 151 commande, lorsqu'il est excité, l'ouverture d'un contact RT normalement fermé, branché en série avec l'alarme 142 de déperchage, entre les lignes 143 et 144 comme le montre la figure 6B. Cette figure 6B montre également une alarme 152 destinée à signaler une chute de pression dans la conduite 100 d'alimentation de la chambre 101 de montée de la perche du vérin 32, laquelle alarme 152 présente par exemple la forme d'une alarme sonore ou d'un voyant lumineux placé au tableau de bord du trolleybus 1 comme on l'a schématisé à la figure 1 et est branchée en série, entre les lignes 143 et 144, avec un contact M normalement fermé, actionné par le manostat 103 en cas de baisse excessive de pression dans la conduite 100.

On retrouve à la figure 6B le boîtier 51 muni des boutons- poussoirs 52 à 56, et comportant sept broches 153 à 158, dont chacune s'engage dans une partie femelle respective 160 à 166 de la prise 254 lorsque la fiche 253 est engagée dans cette dernière.

La broche 159 correspond à une ligne d'alimentation 167 intérieure au boîtier 51, et s'engage dans la partie femelle 166 quant à elle raccordée en permanence à la ligne d'alimentation 143.

Les autres broches 153 à 158 sont branchées en parallèle sur la ligne 167, respectivement directement, par l'intermédiaire d'un contact normalement ouvert 54 correspondant au bouton- poussoir de déplacement de la perche vers la droite, par l'intermédiaire d'un contact normalement ouvert 53 correspondant au bouton- poussoir de déplacement de la perche vers la gauche, par l'intermédiaire d'un contact normalement ouvert 55 associé au bouton- poussoir de montée de la perche, par l'intermédiaire d'un contact normalement ouvert 56 associé au bouton- poussoir de commande de baisse de la perche, et par l'intermédiaire d'un contact normalement ouvert 52 du bouton- poussoir d'inversion perche de gauche/perche de droite.

Ainsi, l'enfichage de la fiche 253 dans la prise 254 provoque le raccordement de la ligne 167 à la fois avec la ligne 143 et avec la partie femelle 160 qui, comme le montre la figure 6b, est montée en série avec un relais DB de détection de boîtier de télécommande, par ailleurs raccordé à la ligne 144 et qui, de ce fait, se trouve excité dès lors que la fiche 253 est convenablement engagée dans la prise 254.

La partie femelle 165, coopérant avec la broche 158, est quant à elle placée en série avec un relais Dr-Ga de sélection de perche de droite ou de perche de gauche, par ailleurs branché sur la ligne 144 ; en absence d'actionnement du bouton- poussoir 152, ce relais est désexcité, ce qui correspond à la sélection de l'une des perches du trolleybus 1 et par exemple à la perche de droite alors que si le bouton- poussoir 52 est actionné, si bien que son contact est fermé, ce relais est excité, ce qui correspond à la sélection de l'autre perche, à savoir la perche de gauche dans cet exemple.

A cet effet, le relais Dr-Ga commande quatre inverseurs également désignés par Dr-Ga, branchés en série respectivement entre la partie femelle 161 et un relais Dr de déplacement à droite, la partie femelle 162 et un relais Ga de déplacement à gauche, la partie femelle 163 et un relais Mo de montée, la broche 164 et un relais De de descente ; on supposera par convention que ces relais Dr, Ga, Mo, De correspondent à la perche de gauche, si bien qu'on les a illustrés au repos à la figure 6B dans la mesure où l'on a supposé que l'actionnement du bouton-poussoir 52 provoquait la sélection de la perche de gauche, les commutateurs Dr-Ga occupant par conséquent à la figure 6B leur position dans laquelle, du fait d'une sélection de la perche de droite, ils ferment un circuit respectif entre les parties femelles 161 à 164 et des relais identiques aux relais Dr, Ga, Mo, De mais associées à la perche de droite.

De façon générale, toutes les dispositions du schéma électrique illustré aux figures 6A et 6B qui vont être décrites à présent concernent la commande de la perche de gauche, étant entendu que des moyens de commande électrique identiques à ce que l'on va décrire, de même que des moyens de commande pneumatique identiques à ceux que l'on a décrit en référence à la figure 5, sont associés à la perche de droite.

Outre les relais DB, Dr, Ga, Mo, De et Dr-Ga, la figure 6B montre cinq relais, à raison de :
- un relais de déperchage RD branché en série, entre les lignes 143 et 144, avec un contact DB normalement fermé, dont l'excitation du relais DB de détection de boîtier provoque l'ouverture, et avec un fin de course de perche 168 commandé par le détecteur 38-39 et ouvert lorsque les deux tronçons 11 et 16 de la perche sont placés dans le prolongement coaxial l'un de l'autre comme le montrent les figures 1 et 4 en trait plein, ce fin de course 168 se fermant au repos, lorsque le tronçon 16 se décale par pivotement vers le haut autour de l'axe 14 par rapport au tronçon 11, comme le montrent les figures 1 et 4 en trait mixte, c'est-à-dire en cas de déperchage, détecté par le détecteur 38 - 39 ;
- un relais RE de réemperchage, branché en série entre les lignes 143 et 144, avec un contact normalement ouvert RD associé au relais de déperchage RD et avec le bouton- poussoir à actionnement manuel E, normalement ouvert, le relais de réemperchage RE étant auto-alimenté par un contact normalement ouvert RE branché en parallèle avec le bouton- poussoir E ;
- un relais temporisé RET, réglable, branché entre les lignes 143 et 144 en série avec un contact normalement ouvert RE du relais de réemperchage RE ;
- un relais de perche à droite A branché entre les lignes 143 et 144 en série avec le fin de course 141 normalement ouvert et le fin de course 137 également normalement ouvert, en parallèle duquel est monté un contact a d'auto- alimentation du relais A de perche à droite ;
- un relais B de perche à gauche, branché entre les lignes 143 et 144 en série avec le fin de course 141 précité et avec le fin de course 138 de perche à gauche, en parallèle auquel est prévu un contact normalement ouvert b d'auto- alimentation du relais B.

On remarquera que le relais de déperchage RD commande, lorsqu'il est excité, la fermeture d'un contact RD normalement ouvert, branché en parallèle au contact RT normalement fermé pour alimenter l'alarme 142 en cas de déperchage.

La figure 6A illustre plus particulièrement la façon dont des contacts des relais qui viennent d'être décrits en référence à la figure 6B sont montés en série, entre les lignes 143 et 144, avec les solénoïdes des distributeurs associés à l'une des perches, à savoir dans cet exemple la perche de gauche, et que l'on a décrits en référence à la figure 5.

Il en ressort que :
- les solénoïdes 101 et 110 des distributeurs 97 et 105 respectivement de verrouillage de montée et de verrouillage de descente sont montés mutuellement en parallèle, et en série avec un contact DB normalement ouvert du relais DB de détection de boîtier de télécommande, et avec des contacts De et Mo normalement fermés associés respectivement au relais de descente De et au relais de montée Mo ;
- les solénoïdes 129 et 136 des distributeurs 124 et 131 respectivement de verrouillage- droit et verrouillage- gauche sont branchés mutuellement en parallèle, en série avec des contacts normalement fermés Dr et Ga associés respectivement au relais Dr de déplacement à droite et au relais Ga de déplacement à gauche, *ainsi* qu'avec un circuit comportant en parallèle un contact DB normalement ouvert, associé au relais DB de détection de boîtier, et un contact RE normalement ouvert, lui-même placé en série avec un contact RET, normalement fermé, du relais temporisé RET ; la temporisation est avantageusement de l'ordre de quelques secondes, et par exemple de 4 secondes ;
- le solénoïde 73 de commande de distributeur 65 dans le sens de la régulation est branché entre les lignes 143 et 144 en série avec deux contacts normalement fermés, à savoir un contact DB associé au relais DB de la détection de boîtier et un contact RD associé au relais RD de déperchage;
- le solénoïde 95 du distributeur 91 de montée manuelle est branché en série, entre les lignes 143 et 144, avec un montage parallèle de deux contacts normalement ouverts, à savoir un contact RE associé au relais RE de réemperchage et un contact DB associé au relais DB de détection de boîtier ;
- le solénoïde 74 de commande du distributeur 65 dans le sens d'une commande manuelle est branché en série, entre les lignes 143 et 144, avec un montage parallèle de deux contacts normalement ouverts, à savoir un contact DB associé au relais DB de détection de boîtier et un contact RD associé au relais de déperchage RD;
- le solénoïde 87 de commande de distributeur 76 dans un sens correspondant à la descente est branché entre les lignes 143 et 144 en série avec un montage parallèle entre :
   - un contact RE normalement fermé, associé au relais RE de réemperchage et branché en série avec un montage en série d'un contact RD normalement ouvert, associé au relais RD de déperchage, et d'un contact DB normalement fermé, associé au relais DB de détection de boîtier ;
   - un contact De normalement ouvert, associé au relais De de descente et monté en série avec un montage série d'un contact RD normalement fermé, associé au relais RD de déperchage, et d'un contact DB normalement ouvert, associé au relais DB de détection de boîtier ;
- le solénoïde 88 d'actionnement du même distributeur 76 dans un sens correspondant à la montée est branché en série, entre les lignes 143 et 144, avec un montage comportant, en parallèle :
   - un contact Mo normalement ouvert, associé au relais Mo de montée et lui-même placé en série avec le montage série précité d'un contact RD normalement fermé et d'un contact DB normalement ouvert ;
   - un contact RE normalement ouvert, associé au relais RE de réemperchage et monté en série avec le montage série précité d'un contact RD normalement ouvert et d'un contact DB normalement fermé ;
   - un contact RD normalement fermé, associé au relais RD de déperchage ;
- le solénoïde 121 de commande du distributeur 113 dans le sens d'un recentrage, vers la gauche, de la perche supposée trop à droite est branché en série, entre les lignes 143 et 144, avec un montage parallèle comportant :
   - un contact Ga normalement ouvert, associé au relais Ga de déplacement à gauche et lui-même branché en série avec le montage série précité d'un contact RD normalement fermé et d'un contact DB normalement ouvert ;
   - un contact a normalement ouvert, associé au relais A de perche à droite et lui-même placé en série avec le montage série précité d'un contact RD normalement ouvert et d'un contact DB normalement fermé ;
- le solénoïde 122 de commande du distributeur 113 dans le sens d'un recentrage, vers la droite, de la perche supposée trop à gauche est monté en série, entre les lignes 143 et 144, avec un montage parallèle entre :
   - un contact Dr normalement ouvert, associé au relais Dr de déplacement à droite et monté en série avec le montage série précité d'un contact RD normalement fermé et d'un contact DB normalement ouvert ;
   - un contact b normalement ouvert, associé au relais B de perche à gauche et monté en série avec le montage série précité d'un contact RD normalement ouvert et d'un contact DB normalement fermé.

Un Homme du métier comprendra aisément que les schémas pneumatiques et électriques qui viennent d'être décrits, en relation par exemple avec la perche de gauche, permettent au conducteur du trolleybus :
- d'effectuer un emperchage commandé manuellement, en appuyant sur le bouton- poussoir E placé au tableau de bord du trolleybus 1, alors que la perche 10 occupe initialement une position dans laquelle l'axe 12 du tronçon 11 est approximativement horizontal et parallèle au plan 40, le vérin 44 étant alors bloqué, ce qui correspond à une manoeuvre que le conducteur peut effectuer en début de service, alors que le trolleybus 1 occupe une position parfaitement déterminée, éventuellement marquée au sol, par rapport à la caténaire 20 respective ;
- si un incident survient en cours de circulation et nécessite un déperchage volontaire, d'effectuer ce déperchage au moyen du boîtier de télécommande 51 jusqu'à ramener chaque perche dans l'orientation précitée de repos, dans laquelle l'axe 2 du tronçon 11 est approximativement horizontal et parallèle au plan 40;
- en cas de déperchage accidentel ou volontaire en service, d'effectuer au moyen du boîtier de télécommande 51 un réemperchage avec la réorientation de la perche, autour de l'axe de pivotement 5, que peut nécessiter le positionnement du trolleybus par rapport à la caténaire 20 respective.

Dans ces deux derniers cas, le vérin 44 est alimenté de façon appropriée au même titre que le vérin 32. Naturellement, l'alimentation de ce dernier en pression fluidique asservie à l'orientation de la perche 10 autour de l'axe de basculement 8 ne s'effectue que dans des conditions normales de circulation sous caténaire, et une alimentation non régulée, directement par la pression issue des moyens d'alimentation 61, s'y substitue soit en commande manuelle, soit lorsque la détection d'un déperchage provoque automatiquement la descente coercitive de la perche concernée.

De préférence, les commandes respectives des deux perches sont mutuellement indépendantes, pour offrir un maximum de souplesse de manoeuvre ; toutefois, on peut également prévoir de coupler certaines manoeuvres, telles que l'emperchage initial en début de service, au moyen du bouton E, dans la mesure où le trolleybus 1 occupe alors une position parfaitement déterminée par rapport aux caténaires 20.

Bien que l'on ait décrit la présente invention en relation avec l'équipement d'un trolleybus, muni de deux perches portant des têtes de captation destinées à coopérer avec des caténaires respectives, un Homme du métier pourra aisément transposer les dispositions qui viennent d'être décrites au cas d'un tramway, généralement muni d'une seule perche, étant entendu qu'un seul circuit du type décrit en référence à la figure 5 et un seul circuit du type décrit en référence aux figures 6A et 6B devront être prévus dans un tel cas.

De façon générale, soit en fonction d'une adaptation à un type de véhicule déterminé, soit dans le cadre d'équivalences techniques, de simplifications et de perfectionnements, le dispositif qui vient d'être décrit pourra connaître de nombreuses variantes sans que l'on sorte pour autant du cadre de la présente invention.

## Revendications

1. Dispositif de captation d'électricité pour un véhicule tel qu'un trolleybus (1) ou un tramway, comportant une base (4) de montage sur le véhicule (1), une perche (10) de captation d'électricité présentant une première extrémité articulée sur la base (4) notamment autour d'un axe approximativement horizontal (8) de basculement, dans une gamme déterminée d'orientations, et une deuxième extrémité (18) portant une tête (19) de captation d'électricité, et des moyens de levage (32) pour appliquer à la perche un couple de levage, autour dudit axe de basculement (8), de façon à appliquer la tête de captation (19) vers le haut contre une caténaire (20) avec un effort (F) dont la valeur entre dans une gamme déterminée de valeurs,
**caractérisé en ce qu'**il comporte des moyens (57, 58) pour réguler ledit effort (F) en fonction de l'inclinaison de la perche (10), de façon à le maintenir sensiblement à une valeur déterminée.

2. Dispositif selon la revendication 1, **caractérisée en ce qu'**il comporte un vérin (32) de basculement articulé autour d'axes respectifs (42, 43), parallèles audit axe de basculement (8), d'une part sur la base (4) et d'autre part sur la perche (10), des moyens commandés (58, 63 à 110) d'alimentation du vérin de basculement (32) en pression fluidique et des moyens de commande desdits moyens commandés (58, 63 à 110) d'alimentation du vérin de basculement, et **en ce que** les moyens (57, 58) pour réguler ledit effort (F) en fonction de l'inclinaison de la perche (10) comportent des moyens (57, 58) de régulation de la pression fluidique d'alimentation du vérin de basculement (32) en fonction de l'inclinaison de la perche (10).

3. Dispositif selon la revendication 2, **caractérisé en ce que** les moyens de régulation (57, 58) comportent une came (57) solidaire de la perche à la rotation autour de l'axe de basculement (8), et un régulateur de pression (58) commandé par la came (57) et intégré aux moyens commandés (58, 63 à 110) d'alimentation du vérin de basculement (32).

4. Dispositif selon l'une quelconque des revendications 2 et 3, **caractérisé en ce que** les moyens de levage (32) comportent des ressorts, **en ce que** le vérin de basculement (32) est un vérin à simple effet, agissant à l'encontre des ressorts, et **en ce que** les moyens commandés (58, 63 à 110) d'alimentation du vérin de basculement (32) en pression fluidique sont susceptibles d'alimenter le vérin de basculement (32) en pression fluidique dans un sens correspondant à l'application, à la perche (10), d'un couple de descente autour dudit axe de basculement (8), pour provoquer un dégagement de la tête de captation (19) vers le bas par rapport à la caténaire (20).

5. Dispositif selon l'une quelconque des revendications 2 et 3, **caractérisé en ce que** le vérin de basculement (32) est un vérin à double effet (32) et **en ce que** les moyens commandés (63 à 110) d'alimentation du vérin de basculement (32) sont susceptibles d'alimenter celui-ci en pression fluidique dans un sens correspondant à l'application, à la perche (10), d'un couple de descente autour dudit axe de basculement (8), pour provoquer un dégagement de la tête de captation (19) vers le bas par rapport à la caténaire (20), et dans un sens correspondant à l'application dudit couple de levage à la perche (10), de telle sorte que le vérin de basculement (32) constitue également lesdits moyens de levage (32).

6. Dispositif selon l'une quelconque des revendications 2 à 5, **caractérisé en ce qu'**il comporte des moyens (38, 39) de détection pour détecter une annulation dudit effort (F) et pour commander alors automatiquement l'alimentation du vérin de basculement (32) en pression fluidique dans un sens correspondant à l'application, à la perche (10), d'un couple de descente autour dudit axe de basculement (8), pour provoquer un dégagement de la tête de captation (19) vers le bas par rapport à la caténaire (20), afin de descendre automatiquement la tête de captation (19) en cas de déperchage.

7. Dispositif selon la revendication 6, **caractérisé en ce qu'**il comporte des moyens pour alimenter séquentiellement le vérin de basculement (32) en pression fluidique dans un sens correspondant à l'application, à la perche (10), d'un couple de descente autour dudit axe de basculement (8), pour provoquer un dégagement de la tête de captation (19) vers le bas par rapport à la caténaire (20), commandés par les moyens (38, 39) de détection d'une annulation dudit effort, pour descendre automatiquement la tête de captation (19) en deux temps en cas de déperchage, à savoir un premier temps de descente comparativement rapide et un deuxième temps de descente comparativement lent.

8. Dispositif selon l'une quelconque des revendications 6 et 7, **caractérisé en ce que** la première extrémité (9) de la perche (10) est en outre articulée sur la base (4) autour d'un axe approximativement vertical (5) de pivotement, dans une gamme déterminée d'orientations, incluant une orientation déterminée de référence, et **en ce que** sont prévus des moyens de centrage (44 à 46) pour ramener coercitivement la perche (10) dans ladite position déterminée de référence, commandés par lesdits moyens de détection (38, 39), pour placer en outre automatiquement, en cas d'annulation dudit effort (F), la perche (10) dans ladite orientation déterminée de référence en laissant par contre la perche (10) libre de pivoter autour dudit axe de pivotement (5), dans ladite gamme déterminée d'orientations, lorsque la tête de captation (19) s'applique vers le haut contre la caténaire avec un effort (F) dont la valeur entre dans ladite gamme déterminée de valeurs.

9. Dispositif selon la revendication 8 en combinaison avec la revendication 7, **caractérisé en ce que** les moyens de centrage (44 à 46) sont commandés, par les moyens de détection (38, 39), de façon à placer automatiquement la perche (10) dans ladite orientation déterminée de référence au cours du deuxième temps de descente.

10. Dispositif selon l'une quelconque des revendications 8 et 9, **caractérisé en ce que** les moyens de centrage (44 à 46) sont en outre propres à placer coercitivement la perche (10) dans toute orientation choisie dans ladite gamme déterminée d'orientations, et **en ce que** sont prévus des moyens (52 à 54) de commande manuelle à cet égard.

11. Dispositif selon l'une quelconque des revendications 8 à 10, **caractérisé en ce que** les moyens de centrage (44 à 46) comportent un vérin de pivotement (44), à double effet, une transmission mécanique (45, 46) entre le vérin de pivotement (44) et la perche (10), et des moyens (111 à 141) commandés d'alimentation du vérin de pivotement en pression fluidique dans l'un et l'autre de deux sens mutuellement opposés pour appliquer, à la perche (10), un couple de pivotement autour dudit axe de pivotement.

## Patentansprüche

1. Stromabnehmervorrichtung für Fahrzeuge, wie Oberleitungsomnibusse (1) oder Straßenbahnen, mit einer Basis (4) zur Montage am Fahrzeug (1), einer Stromabnehmerstange (10), welche ein erstes Ende, das an der Basis (4) insbesondere um eine ungefähr horizontale Kippachse (8) zum Kippen in einem Bereich bestimmter Ausrichtungen drehbar angebracht ist, sowie ein zweites Ende (18), welches einen Stromabnehmerkopf (19) trägt, aufweist, Anhebemitteln (32) zur Aufbringung eines Anhebemoments auf die Stromabnehmerstange um die Kippachse (8), derart, dass der Stromabnehmerkopf (19) nach oben gegen eine Fahrleitung (20) mit einer Kraft (F) angelegt wird, deren Wert in einem bestimmten Wertebereich eintritt,
**dadurch gekennzeichnet, dass** sie Mittel (57, 58) zur Regelung der Kraft (F) in Abhängigkeit von der Neigung der Stromabnehmerstange (10) aufweist, derart, dass sie im Wesentlichen auf einem bestimmten Wert gehalten wird.

2. Vorrichtung nach Anspruch 1, **dadurch gekennzeichnet, dass** sie einen Kippzylinder (32), der um zur horizontalen Kippachse (8) parallele Achsen (42, 43) drehbar einerseits an der Basis (4) und andererseits an der Stromabnehmerstange (10) angelenkt ist, gesteuerte Mittel (58, 63 bis 110) zur Speisung des Kippzylinders (32) mit Fluiddruck und Mittel zur Steuerung der gesteuerten Mittel (58, 63 bis 110) zur Speisung des Kippzylinders aufweist, und dass die Mittel (57, 58) zur Regelung der Kraft (F) in Abhängigkeit von der Neigung der Stromabnehmerstange (10) Mittel (57, 58) zur Regelung des Speisefluiddrucks der Speisung des Kippzylinders (32) in Abhängigkeit von der Neigung der Stromabnehmerstange (10) aufweisen.

3. Vorrichtung nach Anspruch 2, **dadurch gekennzeichnet, dass** die Regelungsmittel (57, 58) einen mit der Stromabnehmerstange um die Kippachse (8) drehfest verbundenen Nocken (57) und einen von dem Nocken (57) gesteuerten und in die gesteuerten Mittel (58, 63 bis 110) zur Speisung des Kippzylinders integrierten Druckregler (58) aufweisen.

4. Vorrichtung nach irgendeinem der Ansprüche 2 und 3, **dadurch gekennzeichnet, dass** die Anhebemittel (32) Federn aufweisen, dass der Kippzylinder (32) ein einfachwirkender Zylinder ist, der gegen die Federn arbeitet, und dass die gesteuerten Mittel (58, 63 bis 110) zur Speisung des Kippzylinders (32) mit Fluiddruck so eingerichtet sind, dass sie geeignet sind, den Kippzylinder (32) mit Fluiddruck in einem sinne, der einer Aufbringung eines Niedergehmoments um die Kippachse (8) auf die Stromabnehmerstange (10) entspricht, zu speisen, um ein Lösen des Stromabnehmerkopfs (19) nach unten in Bezug aufdie Fahrleitung (20) zu bewirken.

5. Vorrichtung nach irgendeinem der Ansprüche 2 und 3, **dadurch gekennzeichnet, dass** der Kippzylinder (32) ein doppeltwirkender Zylinder (32) ist und dass die gesteuerten Mittel (63 bis 110) zur Speisung des Kippzylinders (32) so eingerichtet sind, dass sie geeignet sind, diesen mit Fluiddruck in einem Sinne, der der Aufbringung eines Niedergehmoments um die Kippachse (8) auf die Stromabnehmerstange (10) entspricht, um ein Lösen des Stromabnehmerkopfs (19) nach unten in Bezug auf die Fahrleitung (20) zu bewirken, und in einem Sinne, der einer Aufbringung des Anhebemoments auf die Stromabnehmerstange (10) entspricht, so dass der Kippzylinder (32) auch die Anhebemittel (32) bildet, zu speisen.

6. Vorrichtung nach irgendeinem der Ansprüche 2 bis 5, **dadurch gekennzeichnet, dass** sie Nachweismittel (38, 39) zum Nachweisen einer Aufhebung der Kraft (F) und zur nachfolgenden automatischen Steuerung der Speisung des Kippzylinders (32) mit Fluiddruck in einem Sinne, der der Aufbringung eines Niedergehmoments um die Kippachse (8) auf die Stromabnehmerstange (10) entspricht, aüfweist, um ein Lösen des Stromabnehmerkopfs (19) nach unten in Bezug auf die Fahrleitung (20) zu bewirken, damit der Stromabnehmerkopf (19) im Falle eines Herausspringens automatisch niedergeht.

7. Vorrichtung nach Anspruch 6, **dadurch gekennzeichnet, dass** sie Mittel zur sequenziellen Speisung des Kippzylinders (32) mit Fluiddruck in einem Sinne, der der Aufbringung eines Niedergehmoments um die Kippachse (8) auf die Stromabnehmerstange (10) entspricht, aufweist, um ein Lösen des Stromabnehmerkopfs (19) nach unten in Bezug auf die Fahrleitung (20) zu bewirken, gesteuert durch die Mittel (38, 39) zum Nachweisen einer Aufhebung der Kraft aufweist, um den Stromabnehmerkopf (19) bei einem Herausspringen in zwei Bewegungen, nämlich einer vergleichsweise schnellen ersten Niedergehbewegung und einer vergleichsweise langsamen zweiten Niedergehbewegung, niederzuführen.

8. Vorrichtung nach irgendeinem der Ansprüche 6 und 7, **dadurch gekennzeichnet, dass** das erste Ende (9) der Stromabnehmerstange (10) ferner an der Basis (4) um eine ungefähr vertikale Schwenkachse (5) zum Schwenken in einem Bereich von Ausrichtungen, die eine bestimmte Referenzausrichtung enthalten, drehbar angebracht ist, und dass Zentriermittel (44 bis 46) zur Zwangsrückführung der Stromabnehmerstange (10) in die bestimmte Referenzstellung, gesteuert durch die Nachweismittel (38, 39), vorgesehen sind, um ferner automatisch im Falle einer Aufhebung der Kraft (F) die Stromabnehmerstange (10) in der bestimmten Referenzausrichtung anzuordnen, während im Gegensatz dazu die Stromabnehmerstange (10) frei um die Schwenkachse (5) in dem bestimmten Bereich von Ausrichtungen schwenken kann, wenn der Stromabnehmerkopf (19) sich nach oben gegen die Fahrleitung mit einer Kraft (F) legt, deren Wert in den bestimmten Wertebereich eintritt.

9. Vorrichtung nach Anspruch 8 in Verbindung mit Anspruch 7, **dadurch gekennzeichnet, dass** die Zentriermittel (44 bis 46) durch die Nachweismittel (38, 39) so gesteuert werden, dass die Stromabnehmerstange (10) im Verlauf der zweiten Niedergehbewegung automatisch in der bestimmten Referenzausrichtung angeordnet wird.

10. Vorrichtung nach irgendeinem der Ansprüche 8 und 9, **dadurch gekennzeichnet, dass** die Zentriermittel (44 bis 46) ferner zur Zwangsanordnung der Stromabnehmerstange (10) in jeder gewählten Ausrichtung in dem bestimmten Bereich von Ausrichtungen geeignet sind, und dass in dieser Hinsicht Mittel (52 bis 54) zur manuellen Steuerung vorgesehen sind.

11. Vorrichtung nach irgendeinem der Ansprüche 8 bis 10, **dadurch gekennzeichnet, dass** die Zentriermittel (44 bis 46) einen doppeltwirkenden Schwenkzylinder (44), eine mechanische Kraftübertragung (45, 46) zwischen dem Schwenkzylinder (44) und der Stromabnehmerstange (10) und gesteuerte Mittel (111 bis 141) zur Speisung des Schwenkzylinders mit Fluiddruck in der einen und anderen von zwei entgegengesetzten Richtungen aufweist, um auf die Stromabnehmerstange (10) ein Schwenkmoment um die Schwenkachse aufzubringen.

## Claims

1. An electricity collector device for a vehicle such as a trolleybus (1) or a tram, the device comprising: a base (4) for mounting on the vehicle (1); an electricity collector pole (10) having both a first end articulated to the base (4), in particular about an approximately horizontal tilt axis (8), to occupy a determined range of angles, and a second end (18) carrying an electricity collector head (19); and raising means (32) for applying a raising couple to the pole about said tilt axis (8) so as to urge the collector head (19) upwards against a catenary (20) with a force (F) whose value lies in a determined range of values;
the device being **characterized in that** it includes means (57, 58) for regulating said force (F) as a function of the slope of the pole (10), in such a manner as to hold it substantially at a determined value.

2. A device according to. claim 1, **characterized in that** it includes a tilt actuator (32) hinged about respective axes (42, 43) that are parallel to said tilt axis (8), one connected to the base (4) and the other to the pole (10); controlled means (58, 63 to 110) for feeding fluid pressure to the tilt actuator (32); and control means for controlling said controlled means (58, 63 to 110) for feeding the tilt actuator, and **in that** the means (57, 58) for regulating said force (F) as a function of the slope of the pole (10) comprise means (57, 57) for regulating the fluid pressure fed to the tilt actuator (32) as a function of the slope of the pole (10).

3. A device according to claim 2, **characterized in that** the regulator means (57, 58) comprise a cam (57) secured to the pole to rotate about the tilt axis (8), and a pressure regulator (58) controlled by the cam (57) and integrated in the controlled means (58, 63 to 110) for feeding the tilt actuator (32).

4. A device according to claim 2 or claim 3, **characterized in that** the raising means (32) includes springs, **in that** the tilt actuator (32) is a single-acting actuator, acting against the springs, and **in that** the controlled means (58, 63 to 110) for feeding the tilt actuator (32) with fluid pressure are suitable for feeding the tilt actuator (32) with fluid pressure in a direction corresponding to applying a lowering couple about said tilt axis (8) to the pole (10) to cause the collector head (19) to disengage downwards from the catenary (20)

5. A device according to claim 2 or claim 3, **characterized in that** the tilt actuator (32) is a double-acting actuator (32), and **in that** the controlled means (63 to 110) for feeding the tilt actuator (32) are suitable for feeding it with fluid pressure in a direction corresponding to applying a lowering couple about said tilt axis (8) to the pole (10) to cause the collector head (19) to disengage downwards from the catenary (20), and in a direction corresponding to applying said raising couple to the pole (10) in such a manner that the tilt actuator (32) also constitutes said raising means (32).

6. A device according to any one of claims 2 to 5, **characterized in that** it comprises detector means (38, 39) for detecting when said force (F) is zero and then for causing the tilt actuator (32) to be fed automatically with fluid pressure in a direction corresponding to applying a lowering couple about said tilt axis (8) to the pole (10) to cause the collector head (19) to disengage downwards from the catenary (20), so as to lower the collector head (19) automatically in the event of losing contact.

7. A device according to claim 6, **characterized in that** it has feed means for sequentially feeding the tilt actuator (32) with fluid pressure in a direction corresponding to applying a lowering couple about said tilt axis (8) to the pole (10) to cause the collector head (19) to disengage downwards from the catenary (20), said feed means being controlled by the detector means (38, 39) for detecting that said force is zero, to lower the collector head (19) automatically in two stages in the event of losing contact, namely a first stage in which it is lowered more rapidly, and a second stage in which it is lowered more slowly.

8. A device according to claim 6 or claim 7, **characterized in that** the first end (9) of the pole (10) is also articulated to the base (4) about an approximately vertical pivot axis (5) to occupy a determined range of angles, including a determined reference angle, and **in that** centering means (44 to 46) are provided for constraining the pole (10) to return to said determined reference angle, under the control of said detector means (38, 39), so that in the event of said force (F) becoming zero, the pole (10) is also placed automatically in said determined reference angle, while nevertheless leaving the pole (10) free to pivot about said pivot axis (5) within said determined range of angles when said collector head (19) is urged upwards against the catenary with a force (F) whose value lies within said determined range of values.

9. A device according to claim 8 in combination with claim 7, **characterized in that** the centering means (44 to 46) are controlled by the detector means (38, 39) so as to place the pole (10) automatically in said determined reference angle during the second lowering stage.

10. A device according to claim 8 or claim 9, **characterized in that** the centering means (44 to 46) are also suitable for constraining the pole (10) to take up any selected angle in said determined range of angles, and **in that** manual control means (52 to 54) are provided for this purpose.

11. A device according to any one of claims 8 to 10, **characterized in that** the centering means (44 to 46) comprise a double-acting pivot actuator (44), a mechanical transmission (45, 46) between the pivot actuator and the pole (10), and controlled means (111 to 141) for feeding the pivot actuator with fluid pressure in either of two mutually opposite directions to apply a pivot couple about said pivot axis to the pole (10).
